# EUROPEAN PATENT APPLICATION

(11) **EP 3 203 363 A1**
(43) Date of publication of application: **09.08.2017**
(21) Application number: 16305121.2
(22) Date of filing: 04.02.2016
(51) Int. Cl.: G06F 3/0488, G06F 3/0481, G06F 3/0354

(54) **METHOD FOR CONTROLLING A POSITION OF AN OBJECT IN 3D SPACE, COMPUTER READABLE STORAGE MEDIUM AND APPARATUS CONFIGURED TO CONTROL A POSITION OF AN OBJECT IN 3D SPACE**

(71) Applicant: Thomson Licensing, 92130 Issy-les-Moulineaux (FR)
(72) Inventor: Steinborn, Peter, 31275 Lehrte (DE); Zacharias, Jithin, 64287 Darmstadt (DE); Freimann, Achim, 30163 Hannover (DE); Gries, Ulrich, 30419 Hannover (DE); Boehm, Johannes, 37081 Göttingen (DE); Kordon, Sven, 31515 Wunstorf (DE)
(74) Representative: Huchet, Anne

(57) **Abstract**

A method for controlling a position of an object in 3D space, a computer readable medium and an apparatus (20, 30) configured to control a position of an object in 3D space. A positioning unit (21) positions (12) the object in a first dimension of the 3D space and a second dimension of the 3D space responsive to touch data received from an input device and positions (13) the object in a third dimension of the 3D space responsive to inclination data received from the input device.

## Description

### FIELD

The present solution relates to a method for controlling a position of an object in 3D space. Further, the solution relates to a computer readable storage medium having stored therein instructions enabling controlling a position of an object in 3D space. Furthermore, the solution relates to an apparatus configured to control a position of an object in 3D space.

### BACKGROUND

For a number of applications it is necessary to control the positions of real or virtual objects in 3D space. For example, for planning the lighting of a studio or film set it is necessary to position various light sources in a virtual 3D environment in order to simulate the resulting illumination. Another application is the positioning of objects in the frame of architectural visualizations.

Yet another application stems from emerging audio/video applications, which contain objects that can be manipulated by the end-user, such as audio objects in an MPEG H stream. For example, two persons may watch a sports event with two commentators "A" and "B", i.e. two audio objects. The first person prefers commentator "A", whereas the second person prefers commentator "B". In such a case the audio object "commentator A" should be moved to the loudspeaker nearest to the first person and the audio object "commentator B" to the loudspeaker nearest to the second person. In this way both persons can hear their preferred commentator clearly.

User interfaces with sliders for the three dimensions (x,y,z) are currently used for controlling object positions for the above and similar applications. However, positioning an object in 3D space with such sliders is not very intuitive, in particular for end-users with little or no experience with three-dimensional visualizations.

What is hence missing is a more intuitive and easy to use control mechanism for controlling a position of an object in 3D space.

### SUMMARY

According to one aspect, a method for controlling a position of an object in 3D space comprises:
- positioning the object in a first dimension of the 3D space and a second dimension of the 3D space responsive to touch data received from an input device; and
- positioning the object in a third dimension of the 3D space responsive to inclination data received from the input device.

Similarly, a computer readable storage medium has stored therein instructions enabling controlling a position of an object in 3D space, wherein the instructions, when executed by a computer, cause the computer to:
- position the object in a first dimension of the 3D space and a second dimension of the 3D space responsive to touch data received from an input device; and
- position the object in a third dimension of the 3D space responsive to inclination data received from the input device.
Also, in one embodiment an apparatus configured to control a position of an object in 3D space comprises a positioning unit configured to position the object in a first dimension of the 3D space and a second dimension of the 3D space responsive to touch data received from an input device and to position the object in a third dimension of the 3D space responsive to inclination data received from the input device.

In another embodiment, an apparatus configured to control a position of an object in 3D space comprises a processing device and a memory device having stored therein instructions, which, when executed by the processing device, cause the apparatus to:
- position the object in a first dimension of the 3D space and a second dimension of the 3D space responsive to touch data received from an input device; and
- position the object in a third dimension of the 3D space responsive to inclination data received from the input device.

The present solution allows manipulating the positions of objects in 3D space in an easy and intuitive way. In a 3D environment three dimensions need to be controlled. Two dimensions (e.g. the x- and y-direction) are controlled by the touch data and the third dimension (e.g. the z-direction) is controlled via the inclination data resulting from tilting the device.

Preferably, the touch data are obtained by a touch pad of the input device and the inclination data are obtained by a gyroscope of the input device. Today smartphones or tablets are available in many households. These devices are already equipped with a touch pad and a gyroscope and are thus well suited as an input device.

In one embodiment, the touch data and the inclination data received from the input device are recorded. This allows using the recorded data at a later time once again for position control. It is likewise feasible to record a temporal sequence of touch data and inclination data received from the input device. In this way the user can create a scenario where an object moves along a trajectory specified by the user.

The method according to one of the preceding claims, further comprising receiving information from the input device about which object is to be controlled. This is especially useful when more than one object is available for position control, as it ensures that no object is unintentionally moved.

### BRIEF DESCRIPTION OF THE DRAWINGS

- Fig. 1: is a simplified flow chart illustrating a method for controlling a position of an object in 3D space;
- Fig. 2: schematically depicts a first embodiment of an apparatus configured to control a position of an object in 3D space;
- Fig. 3: schematically shows a second embodiment of an apparatus configured to control a position of an object in 3D space;
- Fig. 4: shows an exemplary simplified user interface for moving sound objects in a room as well as the actual locations of the sound objects in the room;
- Fig. 5: shows a user interface with a single selected object;
- Fig. 6: illustrates movement of a selected object in z-direction by tilting an input device; and
- Fig. 7: illustrates movement of a selected object in x-direction and y-direction using a touch-sensitive display.

### DETAILED DESCRIPTION OF PREFERRED EMBODIMENTS

For a better understanding the principles of embodiments of the invention shall now be explained in more detail in the following description with reference to the figures. It is understood that the invention is not limited to these exemplary embodiments and that specified features can also expediently be combined and/or modified without departing from the scope of the present invention as defined in the appended claims. In the drawings, the same or similar types of elements or respectively corresponding parts are provided with the same reference numbers in order to prevent the item from needing to be reintroduced.

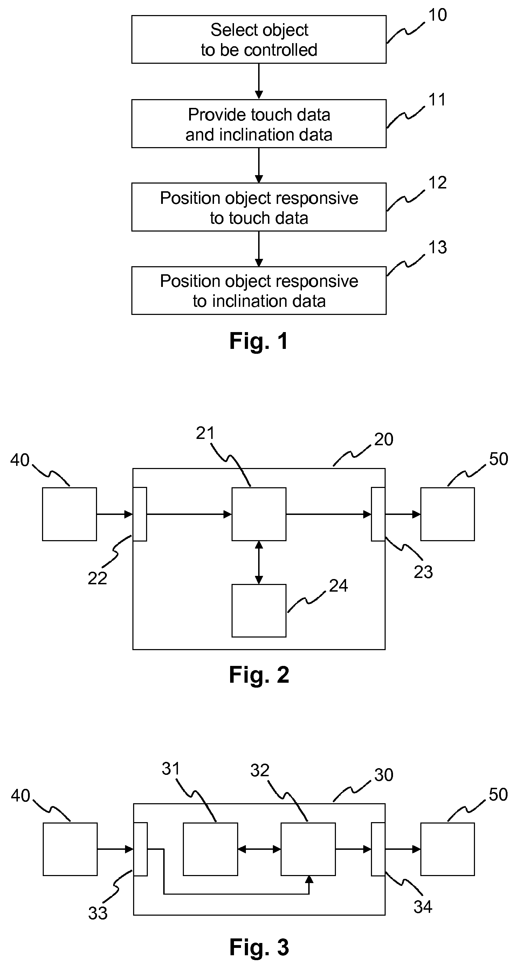

Fig. 1 depicts a simplified flow chart illustrating a method for controlling a position of an object in 3D space. First a user selects 10 an object to be controlled by an input device, e.g. by touching an object displayed on a touch-sensitive display of the input device. The user then provides 11 touch data and inclination data using the input device. For example, he may drag the object over the touch-sensitive display and tilt the input device as desired. Responsive to the touch data received from the input device the object is positioned 12 in a first dimension of the 3D space and a second dimension of the 3D space. Responsive to the inclination data received from the input device the object is positioned 13 in a third dimension of the 3D space.

Fig. 2 shows a simplified schematic illustration of an apparatus 20 configured to control a position of an object in 3D space. The apparatus 20 has a positioning unit 21 for positioning 12 the object in a first dimension of the 3D space and a second dimension of the 3D space responsive to touch data received from an input device 40 and for positioning 13 the object in a third dimension of the 3D space responsive to inclination data received from the input device 40. The touch data and the inclination data are received via an input 22. Position information generated by the positioning unit 21 is made available via an output 23 for further processing, e.g. to a playback device 50. In addition, it may be stored on a storage unit 24. The output 23 may also be combined with the input 22 into a single bidirectional interface. The positioning unit 21 can be embodied as dedicated hardware, e.g. as an integrated circuit. Of course, it may likewise be implemented as software running on a suitable processor. In Fig. 2, the apparatus 20 is coupled to the input device 40 using a wireless or a wired connection. However, the apparatus 20 may also be an integral part of the input device 40.

In Fig. 3, there is another apparatus 30 configured to control a position of an object in 3D space. The apparatus 30 comprises a processing device 32 and a memory device 31. The apparatus 30 is for example a computer or workstation. The memory device 31 has stored therein instructions, which, when executed by the processing device 32, cause the apparatus 30 to perform steps according to one of the described methods. As before, the touch data and the inclination data are received via an input 33. Position information generated by the processing device 31 is made available via an output 34. In addition, it may be stored on the memory device 31. The output 34 may also be combined with the input 33 into a single bidirectional interface.

For example, the processing device 32 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or combination thereof.

The storage unit 24 and the memory device 31 may include volatile and/or non-volatile memory regions and storage devices such as hard disk drives, DVD drives, and solid-state storage devices. A part of the memory is a non-transitory program storage device readable by the processing device 32, tangibly embodying a program of instructions executable by the processing device 32 to perform program steps as described herein according to the principles of the invention.

In the following further implementation details and applications shall be described with particular emphasis on the control of audio objects rendered by a playback device. Of course, other objects may be controlled in the same way. According to the present principles a touch pad or touch display in combination with a gyroscope is used for controlling the position of one or more object. Smartphones and tablets, which typically incorporate both a touch-sensitive display and a gyroscope, are not very expensive and are often available in an end-user household. In addition, usage of a smartphone or tablet as an input device is an increasingly common solution for controlling electronic devices, and most end-users are very familiar with using such input devices.

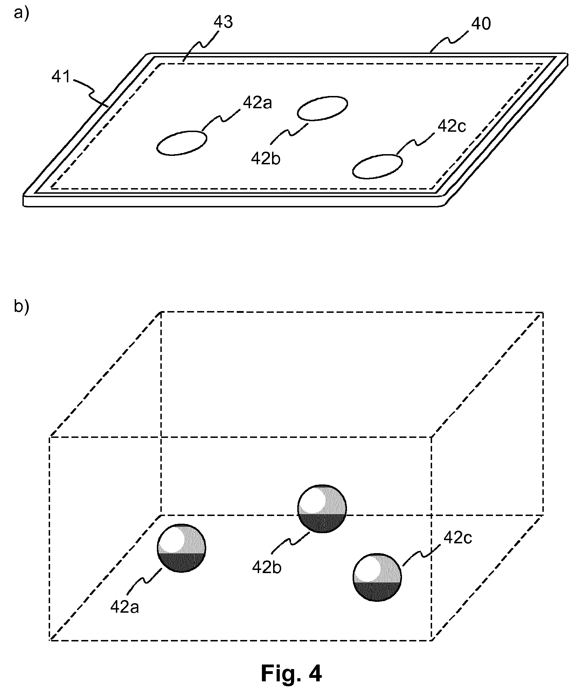

The input device 40 is connected, either with a cable or wirelessly, to the playback device 50 rendering the audio/video content. The input device 40 depicts the movable objects on a display, e.g. as icons in a menu or in an illustration of the area available for positioning the object. An exemplary simplified user interface 41 on the input device 40 for moving sound objects is shown in Fig. 4a). Fig. 4b) shows the actual locations of the sound objects in a room. As can be seen, the user interface 41 depicts three movable objects 42a, 42b, 42c as well as the area 43 (encompassed by the dashed line) available for positioning the objects.

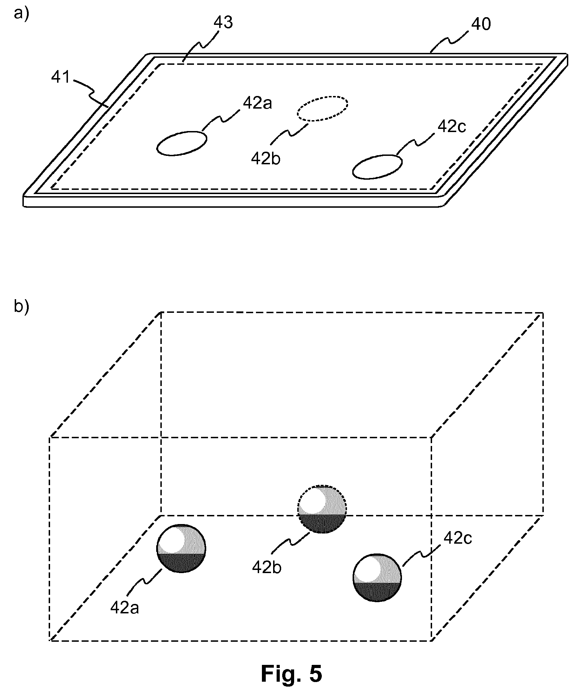

The user now selects one or more objects to be controlled among the available objects, e.g. by touching the representation of the object on the touch-sensitive display. This is shown in the user interface 41 in Fig. 5, where a single sound object 42b has been selected. The selected sound object 42b is highlighted using a dashed line. Of course, other approaches for highlighting a selected object may be used, e.g. color or blinking effects.

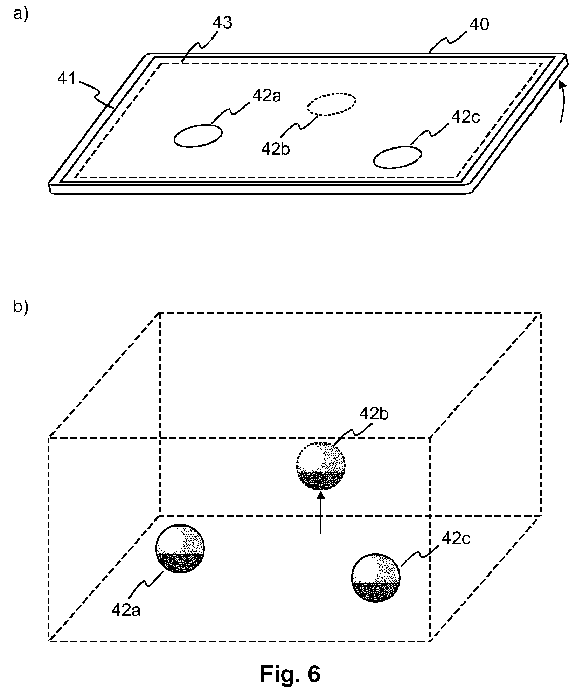

After selection the user can control the object positions with the input device. One dimension, preferably the z-direction, i.e. the height of the object, is controlled using the gyroscope. For this purpose the input device 40 is tilted and the selected objects are moved in the selected direction. This is illustrated in Fig. 6a) and Fig. 6b).

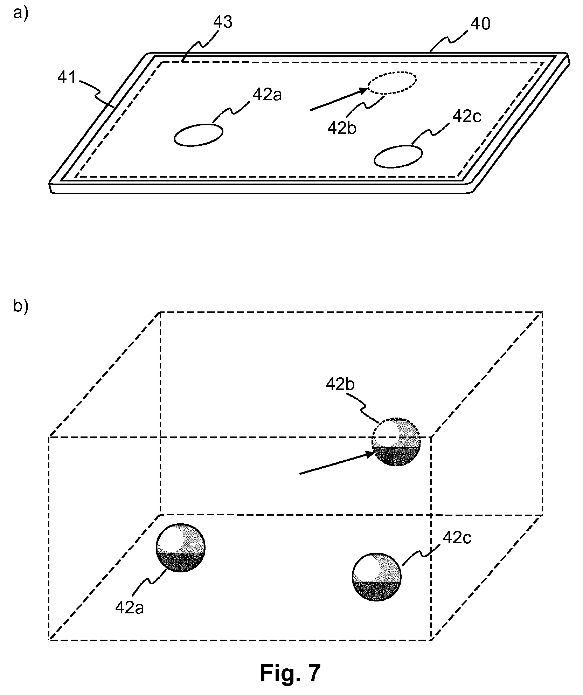

Movement of the selected object in the other dimensions, i.e. the x-direction and the y-direction, is shown in Fig. 7a) and Fig. 7b). The user touches the representation of the selected object 42b on the display and drags it to the desired position.

If more than one object is selected there are different possibilities to move the objects. For example, the selected objects may be moved as a group by moving one of the selected objects with a single finger on the touch-sensitive display. This control mechanism can easily be handled by the user. Alternatively, in case of a multi-touch display, multiple objects are moved with different fingers. This allows simultaneous independent movements of the objects, but requires more experience from the user.

As an application scenario for moving sound objects consider two persons "A" and "B" watching a sports event with two commentators "A" and "B". Initially both commentators are output on a center channel. Person "A" prefers commentator "A". Person "A" takes the input device 40, selects the sound object "commentator A" and moves it to a loudspeaker nearest to him. Person "B" does the same with his preferred commentator "B". As a result both persons can hear their preferred commentator very clearly.

Also possible are control modes like "live" or "playback". For this purpose the control data can be recorded for later playback. For example, two weeks later the above persons "A" and "B" are watching the next sports event and want to use the same configuration as before. To this end they select the recorded control data so that the commentators are again output on the desired loudspeakers.

In a further scenario a user mixes his own version of a clip. He can move and change objects and save the control data. He can mix several sessions sequentially, e.g. controlled by time stamps, and/or in parallel, i.e. working simultaneously with multiple objects, to create a version that he likes best.

## Claims

1. A method for controlling a position of an object in 3D space, the method **comprising:**
- positioning (12) the object in a first dimension of the 3D space and a second dimension of the 3D space responsive to touch data received from an input device (40); and
- positioning (13) the object in a third dimension of the 3D space responsive to inclination data received from the input device (40).

2. The method according to claim 1, **wherein** the touch data are obtained by a touch pad of the input device.

3. The method according to claim 1, **wherein** the inclination data are obtained by a gyroscope of the input device.

4. The method according to one of the preceding claims, **further** comprising recording the touch data and the inclination data received from the input device or recording a temporal sequence of touch data and inclination data received from the input device.

5. The method according to one of the preceding claims, **wherein** the object is a sound object.

6. The method according to one of the preceding claims, **further** comprising receiving information from the input device about which object is to be controlled.

7. A computer readable storage medium having stored therein instructions enabling controlling a position of an object in 3D space, wherein the instructions, when executed by a computer, cause the computer to:
- position (12) the object in a first dimension of the 3D space and a second dimension of the 3D space responsive to touch data received from an input device (40); and
- position (13) the object in a third dimension of the 3D space responsive to inclination data received from the input device (40).

8. An apparatus (20) configured to control a position of an object in 3D space, the apparatus (20) **comprising** a positioning unit (21) configured to position (12) the object in a first dimension of the 3D space and a second dimension of the 3D space responsive to touch data received from an input device (40) and to position (13) the object in a third dimension of the 3D space responsive to inclination data received from the input device (40).

9. An apparatus (30) configured to control a position of an object in 3D space, the apparatus (30) comprising a processing device (31) and a memory device (32) having stored therein instructions, which, when executed by the processing device (32), cause the apparatus (30) to:
- position (12) the object in a first dimension of the 3D space and a second dimension of the 3D space responsive to touch data received from an input device (40); and
- position (13) the object in a third dimension of the 3D space responsive to inclination data received from the input device (40).
